# EUROPEAN PATENT SPECIFICATION

(11) **EP 1 079 124 B1**
(45) Date of publication and mention of the grant of the patent: **27.07.2005**
(21) Application number: 00850138.9
(22) Date of filing: 16.08.2000
(51) Int. Cl.: F16C 33/66

(54) **Lubricating arrangement for a wheeled vehicle**
Schmiereinrichtung für ein Radfahrzeug
Dispositif de lubrification pour un véhicule à roues

(30) Priority: 20.08.1999 SE 9902955
(43) Date of publication of application: 28.02.2001
(73) Proprietor: Scania CV Aktiebolag (publ), 151 87 Södertälje (SE)
(72) Inventor: Eklund, Lars, 118 62 Stockholm (SE); Johansson, Alf, 155 30 Nykvarn (SE); Berecz, Renée, 185 41 Vaxholm (SE); Björkbacka, Osmo, 151 92 Södertälje (SE)

(56) References cited:
- SE-B- 467 956
- US-A- 4 952 077
- US-A- 5 489 190
- PATENT ABSTRACTS OF JAPAN vol. 009, no. 322 (M-440), 18 December 1985 (1985-12-18) & JP 60 157593 A (HITACHI SEISAKUSHO KK;OTHERS: 01), 17 August 1985 (1985-08-17)

## Description

### Technical field

The present invention relates to a lubricating arrangement according to the preamble to patent claim 1.

### State of the art

In certain types of wheeled vehicles, transmission of driving force to driving wheels on an axle takes place from a central gear situated centrally in the vehicle to wheel hubs which are situated at the ends of the axle and are provided with hub gears. In such cases, each wheel hub constitutes from the lubrication point of view a closed unit whereby an attempt is made in various ways to achieve good lubrication of both wheel bearings and hub gears at a variety of wheel rotation speeds. One of the problems this entails is that centrifugal force causes the oil level in an oil reservoir in the wheel hub to vary at different vehicle speeds. At high vehicle speeds a large proportion of the oil forms a ring against the inside wall of the wheel hub cap, with the result that the oil level in the oil reservoir falls and the lubrication of certain parts may be jeopardised. To remedy this, special oil interceptors have been developed to capture part of the oil projected and return it to the oil reservoir. Such an arrangement is described, for example, in Swedish patent specification No. 467 956, which aims at providing good lubrication of the wheel bearings in all of the vehicle's operating situations.

The fact that the quantity of oil present in the wheel hub is relatively small does mean, however, that in certain driving conditions the heating of the oil becomes troublesome. Another difficulty is that the oil in wheel hubs of this type is difficult to clean and therefore needs changing relatively often. A complication in this context is that the central gear and the wheel hubs often have different oil changing intervals.

### Object of the invention

The object of the invention is to provide an improved lubricating arrangement which does not have the disadvantages indicated. A further object is to achieve this by simple means.

### Description of the invention

This object is achieved according to the invention by implementing a lubricating arrangement with the features indicated in patent claim 1.

A considerably larger quantity of oil is made available for lubrication in the wheel hub by connecting the oil reservoir to the inside of the axle housing and to a central gear connected to the latter and by providing oil circulating devices for circulating the oil. The result is better cooling of the oil used.

Reduction in splash losses in the wheel hub, thereby causing the wheel hub to run cooler, can also be achieved by providing a special oil interceptor which at high wheel rotation speeds removes oil from the wheel hub periphery. In this situation it is also found that more oil is available in the central gear, whereas there would otherwise be risk of the oil level being too low as a result of the centrifugal effect.

A special advantage is that it becomes possible to arrange on the central gear an oil filter for cleaning the circulating oil, thereby reducing the frequency of the need to change the oil in the system.

Further advantages and features of the invention are indicated in the ensuing description and patent claims.

The invention is explained below in more detail on the basis of an embodiment depicted in the attached drawings.

### List of drawings

Fig. 1 shows a vertical longitudinal section through an axle housing with associated wheel hub,
Fig. 2 shows a detail on an enlarged scale of a portion of the wheel hub in Fig. 1,
Fig. 3 shows a section along the line III-III in Fig. 1, and
Fig. 4 shows a view from above of the left part of the axle housing in Fig. 1.

### Description of preferred embodiments

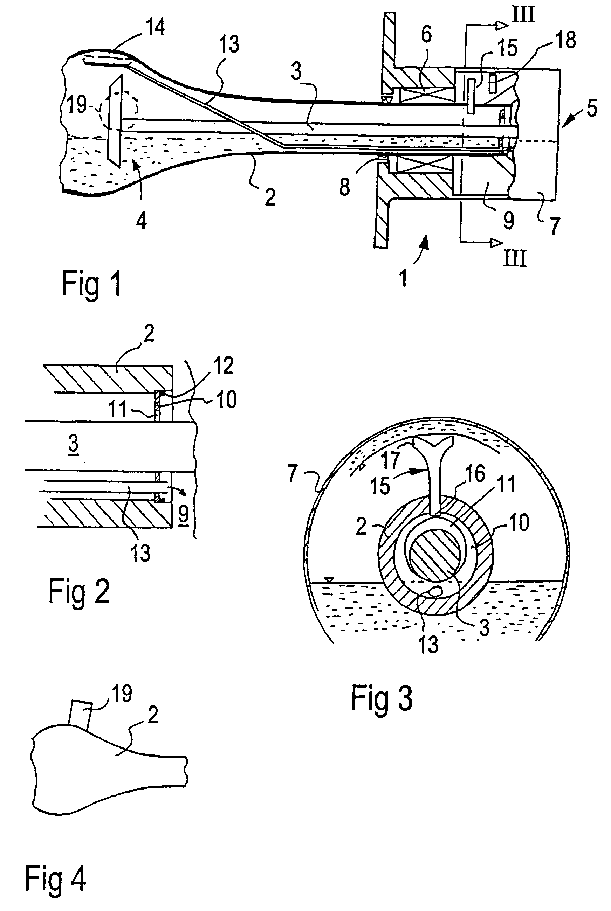

On a wheel-mounted motor vehicle which is provided with hub gears contained in wheel hubs, according to Fig. 1 a wheel hub 1 is mounted for rotation on an axle housing 2, e.g. that of a rear axle of the vehicle. As the rear axle is symmetrically constructed at its two ends, the description below refers only to the design of one end. The axle housing 2 has running inside it a wheel shaft 3 which in a conventional manner is driven via a central gear 4 and which itself drives the wheel hub 1 via a hub gear 5, usually of planetary gear type, arranged in the wheel hub 1. The wheel hub 1 is mounted for rotation on the axle housing 2 by means of wheel bearings 6, usually two in number. A hub cap 7 forming part of the wheel hub 1 seals by means of a seal 8 with respect to the axle housing 2 and forms an oil reservoir 9 from which oil can be supplied to lubricate the hub gear 5 and wheel bearings 6.

According to the invention, the oil reservoir 9 communicates with the inside of the axle housing 2 in order to make oil circulation possible between the wheel hub 1 and the central gear 4. How this is achieved is indicated in more detail in Figs. 2 and 3. A washer 10 fitted in the end of the axle housing 2 has in it an eccentrically positioned hole 11 which is larger than the cross-section of the wheel shaft 3 and which has its lower edge situated level with the underside of the wheel shaft 3. When the oil in the oil reservoir 9 reaches a higher level than the underside of the wheel shaft 3, it can thus run out via the hole 11 in the washer 10 into the axle housing 2, for transport to the central gear 4. The washer 10 may thus be said to form a spillway for the oil reservoir 9. In the lower part of the washer 10, which is advantageously held in place by means of a locking ring 12, there is a hole for a pipe 13 which leads into the oil reservoir 9 and delivers oil to the latter from an oil collector 14 which is situated above the central gear 4 and to which oil is projected upwards from the gearwheels forming part of the central gear 4. The quantity of oil reaching the wheel hub 1 is controlled by the diameter of the pipe 13 and the difference in level between the ends of the pipe. The result is that the oil supply to the wheel hub is relatively constant in a variety of situations.

As the wheel hub 1 rotates at high speed, much of the oil in the oil reservoir 9 will be projected towards the inside of the hub cap 7, while at the same time much of the oil in the central gear 4 is projected towards the inside walls of the axle housing 2. This leads to splash losses and heating of the oil in the wheel hub, while at the same time the oil level in the central gear may become disadvantageously low as a result of the wheel hubs being filled excessively. This problem is dealt with according to the invention, as may be seen in Figs. 1 and 3, by arranging in the wheel hub 1 a first oil interceptor 15 which is fixed relative to the axle housing 2 and which has its outlet leading into the axle housing 2 and its inlet 17 arranged at such a radial distance within the hub cap 7 that it can capture oil from the oil film which forms on the inside of the hub cap when the wheel hub rotates at high speed. This means that the thickness of the oil film can be limited and surplus oil can instead be supplied to the inside of the axle housing 2 and hence to the central gear 4. It is thus possible to determine the quantity of oil in the hub by suitable dimensioning of the distance between the oil interceptor 15 and the inside wall of the hub cap 7.

At lower rotation speeds of the wheel hub 1, the oil film along the inside of the hub cap 7 becomes thinner and most of the oil is gathered in the oil reservoir 9. To ensure at the same time that the bearings 6 receive sufficient lubrication, there is, according to the invention, not only the first oil interceptor 15 but also a second oil interceptor 18 (see Fig. 1) fixed to the axle housing 2. This second oil interceptor 18 is of known design according to the aforesaid Swedish patent specification No. 467 956 and has an outlet leading into the oil reservoir 9 and an inlet situated closer to the inside of the hub cap than the intake of the first oil interceptor, in order to be able to gather oil from a thinner oil film at lower rotation speeds so that sufficient bearing lubrication is assured. As bearing lubrication is described in more detail in the aforesaid specification, no further description thereof is given in this context.

Oil in the central gear 4 can circulate for cleaning through an oil filter 19 which according to Figs. 1 and 4 is mounted on the axle housing 2. This means that such cleaning may also apply to oil in the wheel hub 1, since the oil circulates by means of the oil transport system described.

The oil transport system functions as follows:
At low vehicle speeds, a thin oil film moves over the inside of the hub cap 7 and is scraped off by means of the second oil inceptor 18, for lubrication of the wheel bearings 6. At the same time, the quantity of oil in the oil reservoir 9 is increased by oil from the pipe 13. When the oil level reaches the spillway described, surplus oil runs out into the axle housing 2. Advantageously, the system is dimensioned so that the quantity of oil diverted via the spillway is equal to that supplied via the pipe 13.

At high vehicle speeds, a thicker oil ring forms inside the hub cap 7 and its thickness is increased by oil supplied via the pipe 13, without any oil being removed via the spillway. At a certain predetermined thickness of the oil ring, the first oil interceptor 15 diverts oil to the inside of the axle housing 2, with the result that the quantity of the oil in the hub cap is limited and continuous changing of the oil in the wheel hub is achieved. The oil can thus be both cleaned and cooled continuously.

Different variants of the embodiment depicted are obviously possible within the scope of the invention. For example, the magnitude of the oil flow may be altered by adopting a different level on the spillway from the oil reservoir and by altering the inflow of oil. Depending on the inside diameter of the axle housing, it may in some cases be possible to omit the washer 10 so that the axle housing does itself instead form a spillway. It is also possible to arrange the oil supply otherwise than by gravity via the pipe 13, e.g. by pumping.

## Claims

1. Lubricating arrangement for a wheel hub (1) which is provided with hub gears (5), whereby the wheel hub (1) is mounted on an axle housing (2) which contains a wheel shaft (3) for driving the wheel hub, and whereby the wheel hub is provided with an oil reservoir (9) from which oil can be supplied via lubricating devices (18) to lubricate wheel bearings (6) and hub gears (5) in the wheel hub, **characterised in that** the oil reservoir (9) communicates with the inside of the axle housing (2) and with a central gear (4) which is inside the axle housing and which drives the wheel shaft (3), and that there are oil circulating devices (11,13,15) for oil circulation between the wheel hub (1) and the central gear (4).

2. Lubricating arrangement according to claim 1, **characterised in that** the oil reservoir (9) has a spillway (11) via which oil from the oil reservoir can run out into the axle housing (2) and therefrom to the central gear (4) when the oil reservoir (9) contains a predetermined volume of oil.

3. Lubricating arrangement according to claim 2, **characterised in that** the spillway (11) is level with the underside of the wheel shaft (3), at the point where the wheel shaft protrudes from the axle housing (2) and enters the wheel hub (1).

4. Lubricating arrangement according to claim 3, **characterised in that** the spillway takes the form of a washer (10) which is fitted into the axle housing and which is provided with an eccentrically arranged hole (11) for the wheel shaft (3), the diameter of which is smaller than the diameter of the eccentric hole.

5. Lubricating arrangement according to any one of claims 1-4, **characterised in that** a part of the wheel hub (1) which is fixed to the axle housing (2) is provided with a first oil interceptor (15) which is connected to the inside of the axle housing and which has an outlet (16) leading into the axle housing and an inlet (17) arranged at such a radial distance within a hub cap (7) in the wheel hub that it can capture oil from the oil film which forms along the inside of the cap when the wheel hub rotates at high speeds.

6. Lubricating arrangement according to claim 5, **characterised in that** in addition to the first oil interceptor (15) there is also a second oil interceptor (18) which has its outlet leading into the oil reservoir (9) and its inlet situated closer to the inside of the hub cap (7) than the intake of the first oil interceptor (15), in order to gather oil from a thinner oil film at lower rotation speeds.

7. Lubricating arrangement according to any one of claims 1-6, **characterised in that** for transport of oil from the central gear (4) to the oil reservoir (9) there is at least one oil line (13) which has its inlet situated high in the central gear (4) and at a higher level than the level of its outlet in the oil reservoir (9).

8. Lubricating arrangement according to claim 7, **characterised in that** the inlet of the oil line (13) is connected to an oil collector (14) which is provided with oil projected upwards from the central gear.

9. Lubricating arrangement according to any one of claims 1-8, **characterised in that** an oil filter (19) is arranged on the central gear (4) to clean circulating oil in the central gear and the wheel hub.

## Patentansprüche

1. Schmieranordnung für eine Radnabe (1), die mit Nabenzahnrädern (5) versehen ist, wobei die Radnabe (1) an einem Achsengehäuse (2) angebracht ist, das eine Radwelle (3) zum Antreiben der Radnabe enthält, und wobei die Radnabe mit einem Ölreservoir (9) versehen ist, von dem Öl über Schmiervorrichtungen (18) zugeführt werden kann, um Radlager (6) und Nabenzahnräder (5) in der Radnabe zu schmieren,
**dadurch gekennzeichnet, dass** das Ölreservoir (9) mit dem Innenraum des Achsengehäuses (2) und mit einem zentralen Zahnrad (4) kommuniziert, das innerhalb des Achsengehäuses angeordnet ist und das die Radwelle (3) antreibt, und dass Ölumwälzvorrichtungen (11, 13, 15) für eine Ölumwälzung zwischen der Radnabe (1) und dem zentralen Zahnrad (4) vorgesehen sind.

2. Schmieranordnung nach Anspruch 1,
**dadurch gekennzeichnet, dass** das Ölreservoir (9) einen Überlauf (11) aufweist, über den Öl aus dem Ölreservoir in das Achsengehäuse (2) und von diesem zu dem zentralen Zahnrad (4) ausströmen kann, wenn das Ölreservoir (9) ein vorbestimmtes Ölvolumen enthält.

3. Schmieranordnung nach Anspruch 2,
**dadurch gekennzeichnet, dass** der Überlauf (11) auf einem Niveau mit der Unterseite der Radwelle (3) an dem Punkt liegt, an dem die Radwelle von dem Achsengehäuse (2) vorsteht und in die Radnabe (1) hineinsteht.

4. Schmieranordnung nach Anspruch 3,
**dadurch gekennzeichnet, dass** der Überlauf die Form einer Scheibe (10) aufweist, die in das Achsengehäuse eingesetzt ist und die mit einem exzentrisch angeordneten Loch (11) für die Radwelle (3) versehen ist, deren Durchmesser kleiner als der Durchmesser des exzentrischen Loches ist.

5. Schmieranordnung nach einem der Ansprüche 1 bis 4,
**dadurch gekennzeichnet, dass** ein Teil der Radnabe (1), der in dem Achsengehäuse (2) fixiert ist, mit einem ersten Ölfänger (15) versehen ist, der mit dem Innenraum des Achsengehäuses verbunden ist und der einen Auslass (16) aufweist, der in das Achsengehäuse hineinführt, und einen Einlass (17) aufweist, der in einem derartigen radialen Anstand innerhalb einer Nabenhülse (7) in der Radnabe angeordnet ist, dass er Öl von dem Ölfilm erfassen kann, der sich entlang der Innenseite der Hülse ausbildet, wenn sich die Radnabe mit hohen Drehzahlen dreht.

6. Schmieranordnung nach Anspruch 5,
**dadurch gekennzeichnet, dass** zusätzlich zu dem ersten Ölfänger (15) auch ein zweiter Ölfänger (18) vorgesehen ist, dessen Auslass in das Ölreservoir (9) führt und dessen Einlass näher zur Innenseite der Nabenhülse (7) angeordnet ist, als der Einlass des ersten Ölfängers (15), um Öl von einem dünneren Ölfilm bei niedrigeren Drehzahlen zu erfassen.

7. Schmieranordnung nach einem der Ansprüche 1 bis 6,
**dadurch gekennzeichnet, dass** zur Übertragung von Öl von dem zentralen Zahnrad (4) zu dem Ölreservoir (9) wenigstens eine Ölleitung (13) vorgesehen ist, deren Einlass hoch im zentralen Zahnrad (4) und auf einem höheren Niveau angeordnet ist, als das Niveau ihres Auslasses in dem Ölreservoir (9).

8. Schmieranordnung nach Anspruch 7,
**dadurch gekennzeichnet, dass** der Einlass der Ölleitung (13) mit einer Ölsammeleinrichtung (14) verbunden ist, die mit Öl versorgt wird, das von dem zentralen Zahnrad nach oben abgeworfen wird.

9. Schmieranordnung nach einem der Ansprüche 1 bis 8,
**dadurch gekennzeichnet, dass** ein Ölfilter (19) an dem zentralen Zahnrad (4) angeordnet ist, um zirkulierendes Öl in dem zentralen Zahnrad und der Radnabe zu reinigen.

## Revendications

1. Dispositif de graissage pour un moyeu de roue (1) qui est pourvu d'engrenages de moyeu (5), dans lequel le moyeu de roue (1) est monté sur un carter d'essieu (2) qui contient un essieu (3) pour entraîner le moyeu de roue, et dans lequel le moyeu de roue est pourvu d'un réservoir d'huile (9) à partir duquel de l'huile peut être fournie par l'intermédiaire de mécanismes de graissage (18) pour graisser les paliers de roue (6) et les engrenages de moyeu (5) dans le moyeu de roue, **caractérisé en ce que** le réservoir d'huile (9) communique avec l'intérieur du carter d'essieu (2) et avec un engrenage central (4) qui est à l'intérieur du carter d'essieu et qui commande l'essieu (3), et **en ce qu'**il y a des mécanismes de circulation d'huile (11, 13, 15) pour la circulation d'huile entre le moyeu de roue (1) et l'engrenage central (4).

2. Dispositif de graissage selon la revendication 1, **caractérisé en ce que** le réservoir d'huile (9) a un déversoir latéral (11) par l'intermédiaire duquel l'huile du réservoir d'huile peut sortir et s'écouler dans le carter d'essieu (2) et à partir de là à l'engrenage central (4) lorsque le réservoir d'huile (9) contient un volume prédéterminé d'huile.

3. Dispositif de graissage selon la revendication 2, **caractérisé en ce que** le déversoir latéral (11) est au niveau de la partie inférieure de l'essieu (3), au point où l'essieu fait saillie du carter d'essieu (2) et entre dans le moyeu de roue (1).

4. Dispositif de graissage selon la revendication 3, **caractérisé en ce que** le déversoir latéral prend la forme d'une rondelle (10) qui est ajustée dans le carter d'essieu et qui est pourvue d'un orifice (11) disposé de manière excentrique pour l'essieu (3), le diamètre dudit essieu étant plus petit que le diamètre de l'orifice excentrique.

5. Dispositif de graissage selon l'une quelconque des revendications 1 à 4, **caractérisé en ce qu'**une partie du moyeu de roue (1) qui est fixée au carter d'essieu (2) est pourvue d'un premier intercepteur d'huile (15) qui est relié à l'intérieur du carter d'essieu et qui a une sortie (16) conduisant dans le carter d'essieu et une entrée (17) disposée à une distance radiale à l'intérieur d'un chapeau de moyeu (7) dans le moyeu de roue, distance telle que ladite entrée peut prendre de l'huile du film d'huile qui se forme le long de l'intérieur du chapeau lorsque le moyeu de roue est en rotation à de grandes vitesses.

6. Dispositif de graissage selon la revendication 5, **caractérisé en ce qu'**en plus du premier intercepteur d'huile (15) il y a un second intercepteur d'huile (18) qui a sa sortie conduisant dans le réservoir d'huile (9) et son entrée située plus proche de l'intérieur du chapeau de moyeu (7) que l'entrée du premier intercepteur d'huile (15), de manière à collecter de l'huile à partir d'un film d'huile plus mince à des vitesses de rotation plus basses.

7. Dispositif de graissage selon l'une quelconque des revendications 1 à 6, **caractérisé en ce que**, pour le transport de l'huile de l'engrenage central (4) au réservoir d'huile (9), il est prévu au moins un tuyau d'huile (13) qui a son entrée située en position haute dans l'engrenage central (4) et à un plus haut niveau que le niveau de sa sortie dans le réservoir d'huile (9).

8. Dispositif de graissage selon la revendication 7, **caractérisé en ce que** l'entrée du tuyau d'huile (13) est reliée à un collecteur d'huile (14) qui est alimenté par de l'huile projetée vers le haut à partir de l'engrenage central.

9. Dispositif de graissage selon l'une quelconque des revendications 1 à 8, **caractérisé en ce qu'**un filtre d'huile (19) est disposé sur l'engrenage central (4) pour nettoyer l'huile circulant dans l'engrenage central et le moyeu de roue.
